# EUROPEAN PATENT APPLICATION

(11) **EP 2 345 975 A1**
(43) Date of publication of application: **20.07.2011**
(21) Application number: 10151009.7
(22) Date of filing: 18.01.2010
(51) Int. Cl.: G06F 21/00, H04W 12/08, H04L 29/06

(54) **Content delivery verification system**

(71) Applicant: Trinity Mobile Limited, Basingstoke, Hampshire RG24 8AG (GB)
(72) Inventor: Culyer, Robert Frank, Hampshire GU51 1BW (GB)
(74) Representative: Locke, Andrew Robert

(57) **Abstract**

A content delivery verification system (100) for verifying a device with a server to enable the device to receive content from the server, the system comprises:
a link generator (120) operative to generate a URI/URL/URN (115) linked to content (110);
a message generator (140), operative to generate a message comprising the URI/URL/URN (115);
a messaging system (150), operative to deliver the message to the device via a communications network (200);
a database (130) operative to store the generated URI/URL/URN (115);
and being further operative, when the device requests the content linked to the URI/URL/URN (115); to store data exchanged using the URI/URL/URN (115) during the request indicative of the identity of the device;
the system further comprising a content server (160) operative to verify that any device subsequently requesting the content linked to the URI/URL/URN (115) is authorised to receive the content by determining whether data exchanged using the URI/URL/URN (115) during the subsequent request matches the data stored on the database.

A corresponding method and server are also disclosed.

## Description

The invention relates to a content delivery verification system for verifying a device with a server to enable the device to receive content from the server.

Various types of content can be verified which include, but are not limited to, web pages, audio files, video files, animation files, text files, photos, logos and barcode images.

Various systems are known for the delivery of content to devices including for example mobile telecommunications devices such as mobile phones and PDAs, mobile devices such as laptop PCs, and desktop devices such as desktop PCs. These may function in accordance with a wide range of national and international standards.

One well known method is to transmit a navigation URL to a mobile phone device using a formatted SMS text message. This URL could locate content comprising a web site, downloadable image or audio file, or identify content being a unique transaction such as a ticket or airline boarding pass.

The term URL as used herein is intended to refer to a URL, a URI (Uniform Resource Identifier) or a URN (Uniform Resource Name). A URI is typically a string of characters used to identify a name or a resource on the Internet. A URI may be classified as a locator (URL), or a name (URN), or both. The URN defines an item's identity, while the URL provides a location for finding it.

There are well known standard approaches to ensure that content downloaded from the URL may not be copied or forwarded, for example using Digital Rights Management (DRM) encoding such as forward locking.

DRM however does not prevent the URL being used on multiple devices to request the same content. Where the content relates to an item such as a ticket or airline boarding pass this disadvantage has financial and security implications.

According to a first aspect of the invention there is provided a content delivery verification system for verifying a device with a server to enable the device to receive content from the server, the system comprising:
a link generator operative to generate a URI/URL/URN linked to content;
a message generator, operative to generate a message comprising the URI/URL/URN;
a messaging system operative to deliver the message to the device via a communications network;
a database operative to store the generated URI/URL/URN; and being further operative, when the device requests the content linked to the URI/URL/URN; to store data exchanged using the URI/URL/URN during the request indicative of the identity of the device;
the system further comprising a content server operative to verify that any device subsequently requesting the content linked to the URI/URL/URN is authorised to receive the content by determining whether data exchanged using the URI/URL/URN during the subsequent request matches the data stored on the database.

According to a second aspect of the invention there is provided a method for verifying a device with a server to enable the device to receive content from the server, the method comprising steps of:
using a link generator to generate a URI/URL/URN linked to content;
using a message generator to generate a message comprising the URI/URL/URN;
using a messaging system to deliver the message to the device via a communications network;
storing the generated URI/URL/URN on a database; and, when the device requests the content linked to the URI/URL/URN; storing data exchanged using the URI/URL/URN during the request indicative of the identity of the device; and
verifying, using a content server, that any device subsequently requesting the content linked to the URI/URL/URN is authorised to receive the content by determining whether data exchanged using the URI/URL/URN during the subsequent request matches the data stored on the database.

According to a third aspect of the invention there is provided a content delivery verification server for verifying a device with the server to enable the device to receive content from the server, the server comprising a link generator operative to generate a URI/URL/URN linked to content and being operative to communicate with a message generator, operative to generate a message comprising the URI/URL/URN, and with a messaging system, operative to deliver the message to the device via a communications network; the server being further operative to communicate with a database operative to store the generated URI/URL/URN; and being further operative, when the device requests the content linked to the URI/URL/URN; to store data exchanged using the URI/URL/URN during the request indicative of the identity of the device; the server being operative to verify that any device subsequently requesting the content linked to the URI/URL/URN is authorised to receive the content by determining whether data exchanged using the URI/URL/URN during the subsequent request matches the data stored on the database.

Other aspects of the present invention may include any combination of the features or limitations referred to herein.

The present invention may be carried into practice in various ways, but embodiments will now be described by way of example only with reference to the accompanying drawings in which:
**Figure 1** shows a content delivery verification system in accordance with the present invention; and
**Figure 2** shows a content delivery server comprising part of the system of Figure 1.

In accordance with the invention a content delivery verification system generates a navigation URL for content such as a mobile ticket or mobile airline boarding pass. This URL is transmitted to a mobile device using a formatted SMS text message. The URL uniquely identifies the content in question, namely the ticket in this example. The URL may be obfuscated to disguise the details of the content.

The URL issued is stored in a database along with the MSISDN (i.e. the telephone number of the SIM card of the mobile device) or the email address that the URL message was sent to.

When the mobile device browser opens the URL and downloads the content from the server, data routinely passed by the mobile device to the server in the connection headers is captured and stored on the database. The first time the URL content has been requested, these headers are stored in the database against the original URL.

On each subsequent request of the URL content, the headers passed by the mobile device in question to the server are captured and checked against those headers already stored. A hash comparison of headers may be used instead of a string comparison.

If it has been determined that the mobile device is roaming (i.e. on a foreign network) then a subset of the headers may be checked until the mobile device has returned to its home network.

If the headers indicate that it is the same device making the subsequent request for the content then the device making the subsequent request is approved and is allowed to download the content.

If the headers do not match, that mobile device is restricted from downloading the content or may be prompted for another means of authentication.

Although a person skilled in the art may be able to fake some of the headers sent in a content request (e.g. by overriding the user agent setting in the mobile devices firmware), many of the headers are added by the mobile communications network and forwarding gateways. The wide range of headers and their dynamic nature mean that security of the verification system would not be compromised by any unauthorised adaption of the mobile device.

When content linked to the transmitted URL is requested by a browsing client device such as a mobile phone browser requesting content from a remote web site, or by an email client device requesting linked content, certain information is passed from the client device to the server in HTTP headers.

When content is first created it may have no known client device attributes associated with it - i.e. the content is not associated with a particular client device. However, after a client device first requests content using the URL, the device attributes of the client, as captured from the HTTP headers, can be associated with the requested content. Effectively the identity or signature of the device requesting the content is linked to the URL that delivers that content.

Thus, any subsequent request for that content from any device can be checked to make sure that the original client device is attempting to request the content and not an unauthorised client device.

An advantage of this content delivery authentication system is that it uses data routinely passed from a client device to the server and does not require additional software or firmware to be loaded onto the client device.

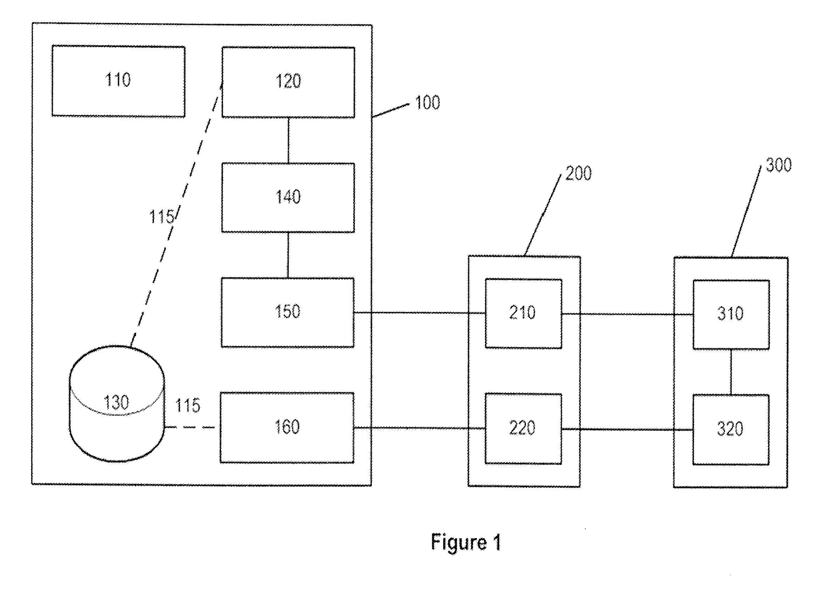

With reference to Figure 1, a content delivery authentication system 100 comprises a URL generator 120.

A URL 115 linked to content 110 is created by URL generator 120 and is stored in database 130. The generated URL 115 is unique to the specific content in question, i.e. the full address and query path. For example, 'http://airlinepass.mobi?Id =abcdefg' would link to the airline boarding pass ID abcdefg.

Message generator 140 generates a message containing URL 115 which is passed to messaging system 150. Messaging system 150 transmits the message to a mobile device 300 via a mobile network 200 using a messaging system 210. Examples of a suitable messaging system include an SMS or MMS messaging system or an email based messaging system. The mobile device 300 may, for example, be a mobile phone, a smart phone, PDA or PC.

The mobile device 300 receives the message and places it in storage 310. The message is retrieved from storage 310 by mobile device 300 which activates client software 320. Client software 320 makes a request to download the content from content server 160 using URL 115 over the mobile network 200 using an appropriate bearer 220 (e.g. GPRS).

For the first content request received by the content server 160 for that particular URL and captures at least one of the HTTP headers that are automatically transmitted between the mobile device 300 and the server 160 during the content request.

Examples of headers that may be recorded and verified include but are not limited to:

| **Header name** | **Description** |
|---|---|
| useragent | User-agent of connecting device |
| x-forwarded-for | Originating IP of a client connection to the server |
| x-forwarded-host | Origination host name |
| x-forwarded-server | Originating server name |
| x-wap-profile | A reference to the user-agent profile as specified |
| x-wap-profile-diff | The WAP gateway/proxy UA-profile overrides |
| x-apn-id | Access Point Name |
| x-ggsnip | GGSN IP address |
| x-network-info | Bearer (i.e. GPRS) information |
| x-roaming | Roaming information |
| x-wapipaddr | IP address of the WAP gateway |
| x-wsb-identit | MSISDN |
| x-up-calling-line-id | MSISDN |
| x-wap-clientid | Unique identifier of the user. |
| x-imsi | IMSI number |

The content server 160 checks if URL 115 has already been verified by checking if any headers have previously been stored in database 130 in connection with that particular URL 115.

If headers have not already been stored on the database 130, the content server 160 stores at least one of the HTTP headers that are automatically transmitted between the mobile device 300 and the server 160 during the content request in database 130.

Thus the identity of the mobile device 300 attempting to access the content via the URL is stored against the originally transmitted URL as a device signature.

If at least one of the HTTP headers that were automatically transmitted between the mobile device 300 and the server 160 during the first content request have already been stored in database 130, the content server 160 will check to see if they match at least one of the headers currently being received from device 300 during what would then be the subsequent content request using the same URL.

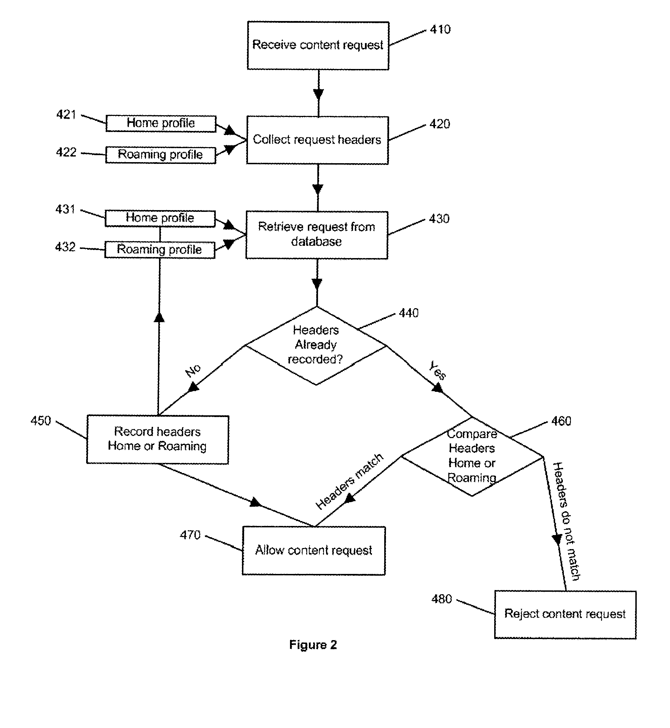

If at least one of the headers stored on database 130 match at least one of the HTTP headers that were automatically transmitted between the mobile device 300 and the server 160 during the current content request the device is verified to receive the content by the server 160. If the headers do not match, the device is not verified to receive the content by the server 160. With reference to Figure 2, content delivery server 160 authenticates a content request 410 by initially collecting the headers from request 410 by process 420. Process 420 determines if the mobile device 300 is on its home network or a foreign network and creates home profile 421 or roaming profile 422 accordingly.

The request 410 and any previously collected headers are retrieved from the database 130 by process 430. Process 430 retrieves stored home profile 431 or roaming profile 432 depending on whether the mobile device is on its home network or a foreign network.

Process 440 determines if any headers have been retrieved by process 430. If no headers have been retrieved, the headers collected by process 420 are stored in the database 130 by process 450 and the content of the transmitted URL 115 is authenticated by process 470 as described above.

If process 440 determines that headers have been retrieved by process 430, the appropriate pair of headers (i.e. home profile 421 and home profile, or roaming profile 422 and roaming profile 432) are passed to process 460 for comparison.

If process 460 determines that both sets of headers originated from the same device, the content of URL 115 is authorised by process 470. If process 460 determines that the headers collected by process 420 indicate a different device is requesting the content the request is rejected by process 480.

In the above described example system and method, the HTTP headers are used for authentication.

There are a number of headers that are provided generically by the connecting handset device browser and network gateway, as indicated above. Some carriers provide the MSISDN and if available we can use this for authentication. Some carriers do not provide the MSISDN in which case different identifiers can be used. The system in accordance with the present invention is not reliant on having the MSISDN.

We have discovered that one, or a combination, of these can be used to arrive at a signature for the device requesting the URL. The headers that can be used for one mobile device could be different to those used for another mobile device. Whichever header or headers are used, the end result is that once a mobile device has accessed the content in question, i.e. an airline boarding pass/ticket, a further attempt to display the same content using the same generated URL but using a further mobile device would not be verified because the 'signature' of the further mobile device would not match that of the first mobile device.

For example, if a first mobile device was browsing to content comprising a boarding pass "abcdefg", to start with there is no device signature recorded.

The first device browses to the boarding pass and the headers from that mobile device handset are stored. The headers might therefore indicate that the device handset is on T-Mobile (from the gateway), is a Blackberry 8100, and is using an IP address x.x.x.x. The system in accordance with the current invention would create and store a signature comprising these headers.

A further mobile device handset then browses to the same boarding pass, and the system stores the headers from that second device handset. The headers might therefore indicate that the further device handset is on 02, is a Samsung, and is using IP address y.y.y.y.

The content server compares the 'signatures' of the first and further devices and determines that the signature of the further device does not match that of the first device. The server then prevents the further device from accessing the content.

This invention may be used in conjunction with DRM to deliver a secure content delivery system.

For content that are barcode images additional security may be utilised using a secure barcode system as discussed in patent application GB 0807883.4.

If it is deemed that an unauthorised request has been made to download content a prompt may be made for further authentication. This further authentication could be in the form of a username/password/PIN or, in the case of a mobile ticket or mobile airline boarding pass, could be details of the payment card used to make the original purchase. Such further authentication may be appropriate for example, if the subsequent request is made by a PC, when the original request was made from a mobile phone device.

It is envisaged that the content server described above may be a stand alone device or may incorporate one, some or all of the link generator, message generator, messaging system, and database.

## Claims

1. A content delivery verification system (100) for verifying a device with a server to enable the device to receive content from the server, the system comprising:
a link generator (120) operative to generate a URI/URL/URN (115) linked to content (110);
a message generator (140), operative to generate a message comprising the URI/URL/URN (115);
a messaging system (150), operative to deliver the message to the device via a communications network (200);
a database (130) operative to store the generated URI/URL/URN (115);
and being further operative, when the device requests the content linked to the URI/URL/URN (115); to store data exchanged using the URI/URL/URN (115) during the request indicative of the identity of the device;
the system further comprising a content server (160) operative to verify that any device subsequently requesting the content linked to the URI/URL/URN (115) is authorised to receive the content by determining whether data exchanged using the URI/URL/URN (115) during the subsequent request matches the data stored on the database.

2. The system (100) of claim 1 wherein the data stored on the database (130) comprises at least one header exchanged between the device and the content server during the content request, the content server (160) being operative to verify that any further device subsequently requesting the content linked to the URI/URL/URN (115) is authorised to receive the content by determining whether data comprising at least one header exchanged between the server and the further device making the subsequent request indicative of the identity of the further device, matches the at least one header stored on the database.

3. A content delivery authentication system (100) according to claim 2, wherein the at least one header comprises a HTTP header (420).

4. A content delivery authentication system (100) according to any one of the preceding claims, wherein the content server (160) is operative to retrieve any headers (430) stored from a previous request for said content (110).

5. A content delivery authentication system (100) according to claim 4, wherein the content server (160) is operative to determine (440) if any stored headers (430) have been retrieved and is operative to store (450) the at least one header (420) from the current request (410) for said content (110) into database (130) if the determination is negative in that no stored headers (430) are identified.

6. A content delivery authentication system (100) according to claim 5, wherein the at least one header (420) is stored as a home profile (431) or roaming profile (432) in dependence on whether the mobile device is determined to be on its home or a foreign network.

7. A content delivery authentication system (100) according to claim 6, wherein the at least one home profile header exchanged during a content request (421) is compared with any home profile headers (431) stored on the database (130) if the mobile device is determined to be on its home network.

8. A content delivery authentication system (100) according to claim 8, wherein the at least one roaming profile header (422) exchanged during a content request is compared with any roaming profile headers (422) stored on the database (13) if the mobile device is determined to be on a foreign network.

9. A content delivery authentication system (100) according to claim 11, wherein the content server (160) is operative to allow (470) the device to access said content (110) if the outcome from the header determination (460) is true.

10. A content delivery authentication system (100) according to claim 12, wherein the content server (160) is operative not to allow the device to access said content (110) if the outcome from the header determination (460) is false.

11. A method for verifying a device with a server to enable the device to receive content from the server, the method comprising steps of:
using a link generator (120) to generate a URI/URL/URN (115) linked to content (110);
using a message generator (140) to generate a message comprising the URI/URL/URN (115);
using a messaging system (150) to deliver the message to the device via a communications network (200);
storing the generated URI/URL/URN (115) on a database; and, when the device requests the content linked to the URI/URL/URN (115); storing data exchanged using the URI/URL/URN (115) during the request indicative of the identity of the device; and
verifying, using a content server (160), that any device subsequently requesting the content linked to the URI/URL/URN (115) is authorised to receive the content by determining whether data exchanged using the URI/URL/URN (115) during the subsequent request matches the data stored on the database.

12. The method of claim 11 wherein comprising the step of storing data on the database (130) comprising at least one header exchanged between the device and the content server during the content request, the content server (160) being used in the verification step to verify that any further device subsequently requesting the content linked to the URI/URL/URN (115) is authorised to receive the content by determining whether data comprising at least one header exchanged between the server and the further device making the subsequent request indicative of the identity of the further device, matches the at least one header stored on the database.

13. A method according to claim 12, wherein the at least one header comprises a HTTP header (420).

14. A method according to any one of the preceding claims, wherein the content server (160) is operative to retrieve any headers (430) stored from a previous request for said content (110).

15. A method according to claim 14, wherein the content server (160) is operative to determine (440) if any stored headers (430) have been retrieved and is operative to store (450) the at least one header (420) from the current request (410) for said content (110) into database (130) if the determination is negative in that no stored headers (430) are identified.

16. A method according to claim 15, wherein the at least one header (420) is stored as a home profile (431) or roaming profile (432) in dependence on whether the mobile device is determined to be on its home or a foreign network.

17. A method according to claim 16, wherein the at least one home profile header exchanged during a content request (421) is compared with any home profile headers (431) stored on the database (130) if the mobile device is determined to be on its home network.

18. A method according to claim 16, wherein the at least one roaming profile header (422) exchanged during a content request is compared with any roaming profile headers (422) stored on the database (13) if the mobile device is determined to be on a foreign network.

19. A method according to any one of claims 12 to 18, wherein the content server (160) is operative to allow (470) the device to access said content (110) if the outcome from the header determination (460) is true.

20. A method according to any one of claims 12 to 18, wherein the content server (160) is operative not to allow the device to access said content (110) if the outcome from the header determination (460) is false.

21. A content delivery verification server (160) for verifying a device with the server to enable the device to receive content from the server, the server comprising a link generator (120)operative to generate a URI/URL/URN (115) linked to content (110) and being operative to communicate with a message generator (140), operative to generate a message comprising the URI/URL/URN (115), and with a messaging system (150), operative to deliver the message to the device via a communications network (200); the server being further operative to communicate with a database (130) operative to store the generated URI/URL/URN (115); and being further operative, when the device requests the content linked to the URI/URL/URN (115); to store data exchanged using the URI/URL/URN (115) during the request indicative of the identity of the device; the server (160) being operative to verify that any device subsequently requesting the content linked to the URI/URL/URN (115) is authorised to receive the content by determining whether data exchanged using the URI/URL/URN (115) during the subsequent request matches the data stored on the database.
